# EUROPEAN PATENT APPLICATION

(11) **EP 4 718 564 A1**
(43) Date of publication of application: **01.04.2026**
(21) Application number: 24896089.0
(22) Date of filing: 22.10.2024
(51) Int. Cl.: H01M 10/0567, H01M 10/0525

(54) **ELECTROLYTE ADDITIVE, ELECTROLYTE AND BATTERY**

(30) Priority: 30.11.2023 CN 202311621860
(71) Applicant: Guangzhou Tinci Materials Technology Co., Ltd, Guangzhou, Guangdong 510760 (CN); Jiujiang Tinci Materials Technology Co., Ltd., Jiujiang, Jiangxi 332000 (CN)
(72) Inventor: LU, Jiasheng, Guangzhou, Guangdong 510670 (CN); FAN, Weizhen, Guangzhou, Guangdong 510670 (CN); SHI, Litao, Guangzhou, Guangdong 510670 (CN)
(74) Representative: Studio Torta S.p.A.
(86) International application number: PCT/CN2024/126524
(87) International publication number: WO 2025/112997

(57) **Abstract**

The present disclosure discloses an electrolyte additive, an electrolyte, and a battery. The electrolyte additive includes a compound represented by Formula 1 and an electrophilic film-forming additive, 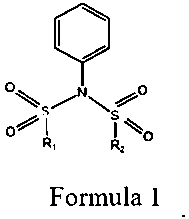 In the compound represented by Formula 1, R₁ and R₂ are each independently fluorine atom or fluoroalkyl having 1 to 10 carbon atoms.

## Description

The application claims priority to the Chinese Patent Application No. 202311621860.2, titled "ELECTROLYTE ADDITIVE, ELECTROLYTE, AND BATTERY", and filed with China National Intellectual Property Administration on November 30, 2023, the entire disclosure of which is incorporated herein by reference.

### FIELD

The present disclosure belongs to the field of batteries, and particularly, relates to an electrolyte additive, an electrolyte, and a battery.

### BACKGROUND

Lithium-ion batteries are widely used in electronic products, electric vehicles, and other fields due to their advantages of high voltage, large capacity, no memory effect, and long service life, and so on. In recent years, the lithium-ion batteries have achieved great success in the field of high-energy batteries. However, consumers still expect batteries with higher comprehensive performance to be launched, which depends on research and development of novel electrode materials and electrolyte systems.

However, factors such as dissolution of positive electrode metal ions, occurrence of side reactions in electrolytes, and degradation at the electrode-electrolyte interface make it difficult to improve overall performance of the lithium-ion batteries. Especially under high-temperature conditions, the decomposition of lithium hexafluorophosphate, a lithium salt commonly used in the electrolytes, is highly exacerbated. Its decomposition product phosphorus pentafluoride (PF₅) is a Lewis acidic substance, which can can catalyze decomposition of carbonate-based solvents in the electrolytes to form gas such as ethylene, carbon dioxide, and carbon monoxide, leading to gas generation in the batteries. In addition, another decomposition product of lithium hexafluorophosphate, hydrogen fluoride, HF, can corrode a positive electrode material, intensifying dissolution of transition metal ions. Further, transition metal ions can also catalyze the decomposition of the carbonate-based solvents, resulting in more severe gas generation.

In order to solve the above problem of gas generation in the lithium-ion batteries at high temperatures, film-forming additives are commonly used to regulate formation of a stable solid electrolyte interphase, SEI, film at the electrode-electrolyte interface. However, the SEI film formed by current film-forming additives is relatively thick or has poor ion conductivity. This leads to a large impedance of the lithium-ion batteries, which in turn results in poor cycle performance and low-temperature performance. Therefore, providing an electrolyte additive with excellent performance is of great significance for improving the comprehensive performance of lithium-ion batteries.

### SUMMARY

The present disclosure aims to solve one of the technical problems in the related art at least to some extent. To this end, an object of the present disclosure is to provide an electrolyte additive, an electrolyte, and a battery. Adding the electrolyte additive to a lithium-ion battery can not only improve low-temperature discharge performance of the battery but also improve high-temperature storage performance and high-temperature cycle performance of the battery.

An aspect of the present disclosure provides an electrolyte additive. The electrolyte additive includes a compound represented by Formula 1 and an electrophilic film-forming additive, 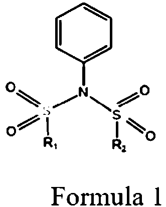 wherein in the compound represented by Formula 1, R₁ and R₂ are each independently fluorine atom or fluoroalkyl having 1 to 10 carbon atoms.

The electrolyte additive of the present disclosure includes the compound represented by Formula 1 and the electrophilic film-forming additive. When the electrolyte additive is added to the lithium-ion battery, the compound represented by Formula 1 decomposes into Product A 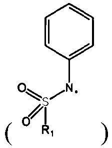 and Product B 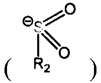 during formation and cycling processes. By adding the electrophilic film-forming additive, on the one hand, the activity of lone-pair electrons on N atom in Product A formed by reductive decomposition of the compound represented by Formula 1 upon electron attack can be weakened using electrophilicity of the electrophilic film-forming additive, thereby blocking Product A from attacking carbonate solvents in the electrolyte and thus reducing the gas generated by decomposition of the carbonate solvents. Thus, the high-temperature storage performance of the battery is improved. On the other hand, the electrophilic film-forming additive can regulate an electrode -electrolyte interface to construct a dense SEI film and cathode electrolyte interphase, CEI, film containing N and S elements. Moreover, stability of the formed SEI film and CEI film can be improved due to presence of the benzene ring in the compound represented by Formula 1, which collectively enhance stability and ionic conductivity at the electrode-electrolyte interface. Thus, a direct-current internal resistance of the battery is significantly reduced. As a result, the cycle performance and the low-temperature discharge performance of the lithium-ion battery are improved. Meanwhile, the presence of the benzene ring can reduce an energy barrier of the reaction of the compound represented by Formula 1, allowing the compound represented by Formula 1 to undergo a reduction reaction more readily during the formation process to quickly generate the SEI film and the CEI film, thereby reducing a side reaction between the electrode sheet and the electrolyte. As a result, the cycle performance of the lithium-ion battery is improved. In addition, the above dense CEI film can prevent Product B 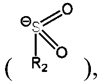 generated from reductive decomposition of the compound represented by Formula 1 upon the electron attack, from corroding the positive electrode after further reaction, thereby reducing a self-discharge phenomenon. As a result, the cycle performance during high-temperature storage is improved. Therefore, adding the electrolyte additive to the lithium-ion battery can not only improve the low-temperature discharge performance of the battery but also enhance its high-temperature storage performance and high-temperature cycle performance.

In some embodiments, a mass ratio of the compound represented by Formula 1 to the electrophilic film-forming additive is 1:(0.7 to 5.3). Therefore, not only can the low-temperature discharge performance of the battery be improved, but also its high-temperature storage performance and high-temperature cycle performance can be enhanced.

In some embodiments, R₁ and R₂ are each independently fluorine atom, fluoromethyl, fluoroethyl, fluoropropyl, or fluorobutyl. Therefore, the cycle performance and the low-temperature discharge performance of the battery can be improved.

In some embodiments, the compound represented by Formula 1 includes at least one of the following compounds: 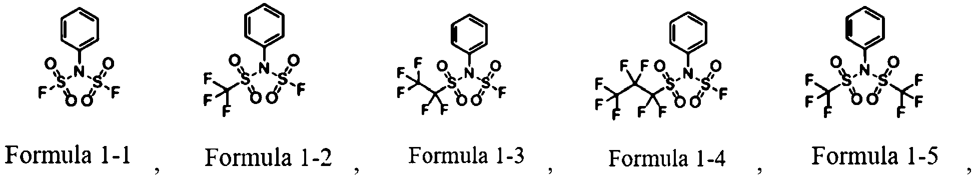 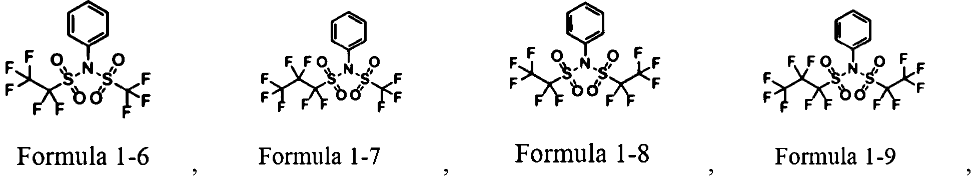 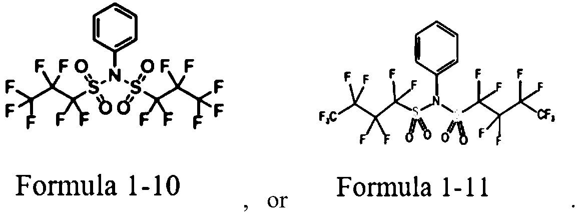 Therefore, not only can the low-temperature discharge performance of the battery be improved, but also its high-temperature storage performance and high-temperature cycle performance can be enhanced.

In some embodiments, the electrophilic film-forming additive includes at least one of borate compound, borate ester compound, phosphite ester compound, isocyanate compound, or anhydride compound. Therefore, not only can the low-temperature discharge performance of the battery be improved, but also its high-temperature storage performance and high-temperature cycle performance can be enhanced.

In some embodiments, the borate compound includes at least one of lithium bis(oxalate)borate, lithium difluoro(oxalato)borate, or lithium tetrafluoroborate. Therefore, not only can the low-temperature discharge performance of the battery be improved, but also its high-temperature storage performance and high-temperature cycle performance can be enhanced.

In some embodiments, the borate ester compound includes a compound represented by Formula 2: 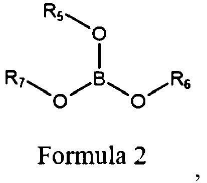 where R₅, R₆, and R₇ are each independently alkyl having 1 to 3 carbon atoms, phenyl, or silyl with a degree of unsaturation less than or equal to 2. Therefore, not only can the low-temperature discharge performance of the battery be improved, but also its high-temperature storage performance and high-temperature cycle performance can be enhanced.

In some embodiments, R₅, R₆, and R₇ are each independently a methyl, trimethylsilyl, phenyl, or dimethylvinylsilyl. Therefore, not only can the low-temperature discharge performance of the battery be improved, but also its high-temperature storage performance and high-temperature cycle performance can be enhanced.

In some embodiments, the borate ester compound includes at least one of the following compounds: 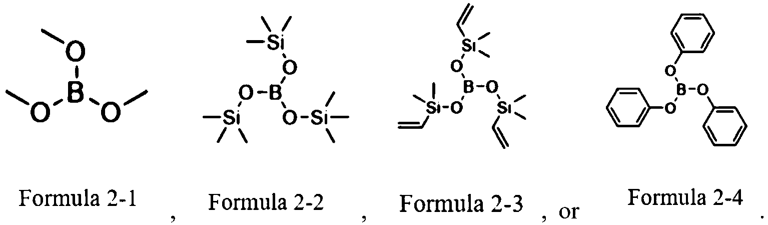 Therefore, not only can the low-temperature discharge performance of the battery be improved, but also its high-temperature storage performance and high-temperature cycle performance can be enhanced.

In some embodiments, the phosphite ester compound includes a compound represented by Formula 3: 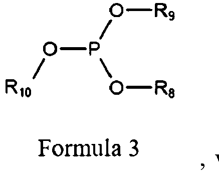 where R₈, R₉, and R₁₀ are each independently alkyl having 1 to 3 carbon atoms, phenyl, or silyl with a degree of unsaturation less than or equal to 2. Therefore, not only can the low-temperature discharge performance of the battery be improved, but also its high-temperature storage performance and high-temperature cycle performance can be enhanced.

In some embodiments, R₈, R₉, and R₁₀ are each independently a trimethylsilyl or phenyl. Therefore, not only can the low-temperature discharge performance of the battery be improved, but also its high-temperature storage performance and high-temperature cycle performance can be enhanced.

In some embodiments, the phosphite ester compound includes at least one of the following compounds: 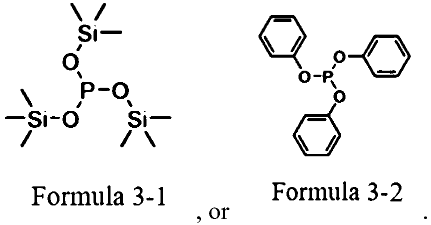 Therefore, not only can the low-temperature discharge performance of the battery be improved, but also its high-temperature storage performance and high-temperature cycle performance can be enhanced.

In some embodiments, the isocyanate compound includes a compound represented by Formula 4: 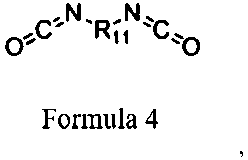 where R₁₁ is alkyl having 1 to 10 carbon atoms, phenyl, or alkyl-substituted phenyl. Therefore, not only can the low-temperature discharge performance of the battery be improved, but also its high-temperature storage performance and high-temperature cycle performance can be enhanced.

In some embodiments, R₁₁ is a hexyl, phenyl, or methylphenyl. Therefore, not only can the low-temperature discharge performance of the battery be improved, but also its high-temperature storage performance and high-temperature cycle performance can be enhanced.

In some embodiments, the isocyanate compound includes at least one of the following compounds: 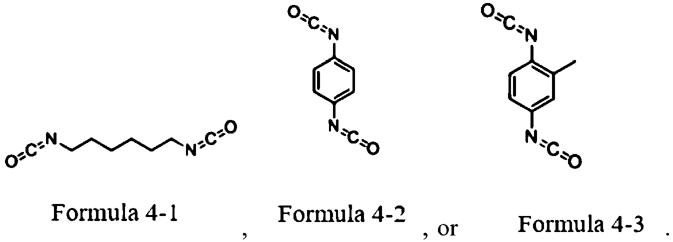 Therefore, not only can the low-temperature discharge performance of the battery be improved, but also its high-temperature storage performance and high-temperature cycle performance can be enhanced.

In some embodiments, the anhydride compound includes at least one of a compound represented by Formula 5 or a compound represented by Formula 6: 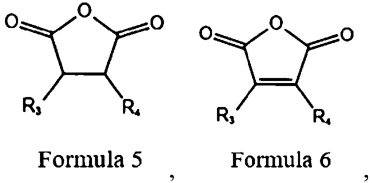 where R₃ and R₄ are each independently hydrogen atom or alkyl having 1 to 3 carbon atoms. Therefore, not only can the low-temperature discharge performance of the battery be improved, but also its high-temperature storage performance and high-temperature cycle performance can be enhanced.

In some embodiments, R₃ and R₄ are each independently hydrogen atom or methyl. Therefore, not only can the low-temperature discharge performance of the battery be improved, but also its high-temperature storage performance and high-temperature cycle performance can be enhanced.

In some embodiments, the anhydride compound includes at least one of the following compounds: 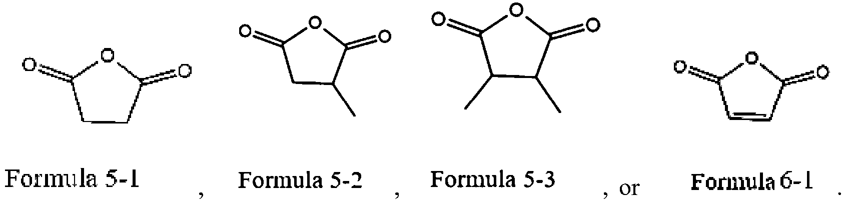 Therefore, not only can the low-temperature discharge performance of the battery be improved, but also its high-temperature storage performance and high-temperature cycle performance can be enhanced.

A second aspect of the present disclosure provides an electrolyte. The electrolyte includes the electrolyte additive according to the first aspect of the present disclosure. Thus, adding the electrolyte to the lithium-ion battery can not only improve the low-temperature discharge performance of the battery but also enhance its high-temperature storage performance and high-temperature cycle performance.

In some embodiments, based on a total mass of the electrolyte, a mass proportion of the compound represented by Formula 1 ranges from 0.1% to 1.5%. Therefore, not only can the low-temperature discharge performance of the battery be improved, but also its high-temperature storage performance and high-temperature cycle performance can be enhanced.

In some embodiments, based on a total mass of the electrolyte, a mass proportion of the electrophilic film-forming additive ranges from 0.1% to 3%. Therefore, not only can the low-temperature discharge performance of the battery be improved, but also its high-temperature storage performance and high-temperature cycle performance can be enhanced.

In some embodiments, the electrolyte further includes a solvent. The solvent includes a carbonate solvent.

A third aspect of the present disclosure provides a battery. The battery includes the electrolyte according to the second aspect of the present disclosure. Therefore, the battery has excellent low-temperature discharge performance, high-temperature cycle performance, and high-temperature storage performance.

Additional aspects and advantages of the present disclosure will be provided in part in the following description, or will become apparent in part from the following description, or can be learned from the practice of the present disclosure.

### DETAILED DESCRIPTION OF THE EMBODIMENTS

The embodiments of the present disclosure are described in detail below, which are intended to explain the present disclosure but are not to be construed as limiting the present disclosure.

The technical solutions of the present disclosure were completed by the inventors based on the following findings: a compound represented by Formula 1 has an significant improvement effect on the cycle performance and low-temperature discharge performance of a battery, but cannot inhibit the battery swelling during high-temperature storage of the battery and has the problem of a low capacity retention rate. The main reasons are as follows. During formation and cycling processes of the battery, the compound represented by Formula 1 undergoes reductive decomposition upon electron attack, and the process is as shown below: 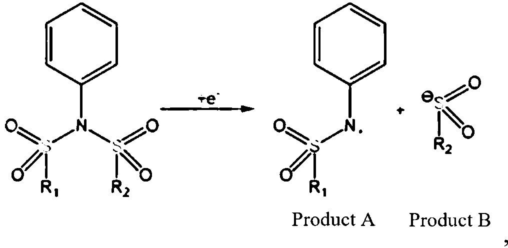 where Decomposition Product A has a strong electron-donating ability, which is specifically attributed to lone-pair electrons on its N atom. Decomposition Product A can be free in an electrolyte and attack carbonate solvents in the electrolyte, which causes the solvent to decompose and generate gas such as carbon dioxide, olefins, and carbon monoxide. As the ambient temperature rises, this process becomes more intense, thereby exacerbating a gas generation phenomenon in the battery. In addition, Decomposition Product B is a relatively unstable "transition state" structure, which easily undergoes decomposition again under high-temperature conditions to form F⁻. As a result, hydrofluoric acid is formed in the electrolyte, which in turn corrodes a positive active material, leading to ion dissolution and damage to the positive active material structure, etc. Thus, a self-discharge phenomenon of an electrode sheet is exacerbated, ultimately leading to a decrease in the cycle performance of the battery during high-temperature storage.

In view of this, an aspect of the present disclosure provides an electrolyte additive. The electrolyte additive includes a compound represented by Formula 1 and an electrophilic film-forming additive, 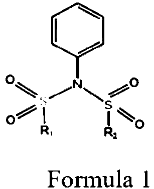 In the compound represented by formula 1, R₁ and R₂ are each independently fluorine atom or fluoroalkyl having 1 to 10 carbon atoms.

The electrolyte additive of the present disclosure includes the compound represented by Formula 1 and the electrophilic film-forming additive. When the electrolyte additive is added to the lithium-ion battery, the compound represented by Formula 1 decomposes into Product A 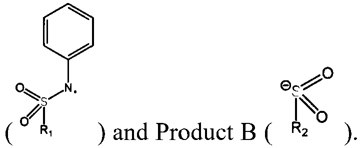 By adding the electrophilic film-forming additive, on the one hand, activity of the lone-pair electrons on the N atom in Product A formed by the reductive decomposition of the compound represented by Formula 1 upon the electron attack can be weakened using electrophilicity of the electrophilic film-forming additive, thereby blocking Product A from attacking the carbonate solvents in the electrolyte and thus reducing the gas generated by the decomposition of the carbonate solvents. Thus, the high-temperature storage performance of the battery is improved. On the other hand, the electrophilic film-forming additive can regulate an electrode-electrolyte interface to construct a dense SEI film and CEI film containing N and S elements. Moreover, stability of the formed SEI film and CEI film can be improved due to presence of the benzene ring in the compound represented by Formula 1, thereby enhancing stability and ionic conductivity at the electrode-electrolyte interface. Thus, a direct-current internal resistance of the battery is significantly reduced. As a result, the cycle performance and the low-temperature discharge performance of the lithium-ion battery are improved. Meanwhile, the presence of the benzene ring can reduce an energy barrier of the reaction of the compound represented by Formula 1. Specifically, the electron cloud on the N atom of the compound represented by Formula 1 have a conjugated effect with the large π bond of the benzene ring, which disperses the electron cloud density on the N atom, thereby weakening the strength of the N-S bond in the compound represented by Formula 1. In addition, an F atom has strong electronegativity, making the electron cloud on the N-S bond more inclined to be close to the F atom. Theoretical calculation data show that when the compound represented by Formula 1 is attacked by electrons, the energy barrier for the reduction reaction is relatively low (-86.98 Cal/mol), indicating that the compound represented by Formula 1 is very prone to undergo an electron-accepting reduction, and its N-S bond is preferentially cleaved upon the electron attack. That is, during a first charge of the lithium-ion battery, the compound represented by Formula 1 undergoes a reductive decomposition reaction by cleaving the N-S bond, quickly forming the SEI film and the CEI film, making it easier for the compound represented by Formula 1 to undergo the reduction reaction during the formation process to quickly generate the SEI film and the CEI film, thereby reducing a side reaction between the electrode sheet and the electrolyte. As a result, the cycle performance of the lithium-ion battery is improved. In addition, the above dense CEI film can prevent Decomposition Product B 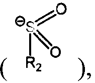 generated from the reductive decomposition of the compound represented by Formula 1 upon the electron attack, from corroding the positive electrode after further reaction, thereby reducing the self-discharge phenomenon. As a result, the cycle performance during high-temperature storage is improved. Therefore, adding the electrolyte additive to the lithium-ion battery can not only improve the low-temperature discharge performance of the battery but also enhance its high-temperature storage performance and high-temperature cycle performance.

In some embodiments of the present disclosure, a mass ratio of the compound represented by Formula 1 to the electrophilic film-forming additive is 1:(0.7 to 5.3). For example, the mass ratio of the compound represented by Formula 1 to the electrophilic film-forming additive is 1:0.7, 1:1, 1:1.5, 1:2, 1:2.5, 1:3, 1:3.5, 1:4, 1:4.5, 1:5, 1:5.3, etc., or may be a range formed by any combination of the above values. Thus, by compounding the compound represented by Formula 1 and the electrophilic film-forming additive in the above mass ratio, the electrophilicity of the electrophilic film-forming additive can be effectively utilize to block the attack of Decomposition Product A of the compound represented by Formula 1 on the carbonate solvents, and thus to reduce the gas generated by the decomposition of the carbonate solvents. In this way, the high-temperature storage performance of the battery is improved. Meanwhile, density and stability of the SEI film and the CEI film can be significantly improved. The dense CEI film can prevent Decomposition Product B of the compound represented by Formula 1 from corroding the positive electrode after further reaction, thereby improving the low-temperature discharge performance and the cycle performance of the battery during its high-temperature storage.

As an example, the above fluoroalkyl having 1 to 10 carbon atoms includes, but is not limited to, a fluoromethyl, fluoroethyl, fluoropropyl, fluorobutyl, fluoropentyl, fluorohexyl, or fluoroheptyl, etc. Preferably, in the compound represented by formula 1, R₁ and R₂ are each independently fluoroalkyl having 1 to 3 carbon atoms.

In some specific embodiments of the present disclosure, in the compound represented by Formula 1, R₁ and R₂ are each independently fluorine atom, fluoromethyl, fluoroethyl, fluoropropyl, or fluorobutyl.

As an example, the above compound represented by Formula 1 includes at least one of the following compounds:

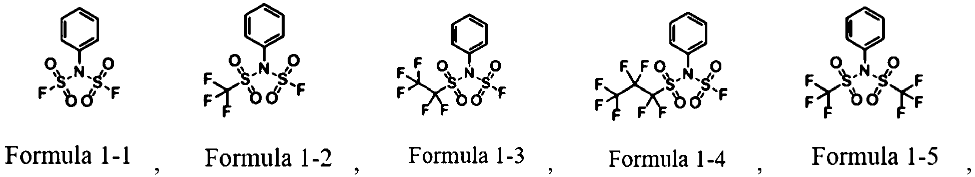

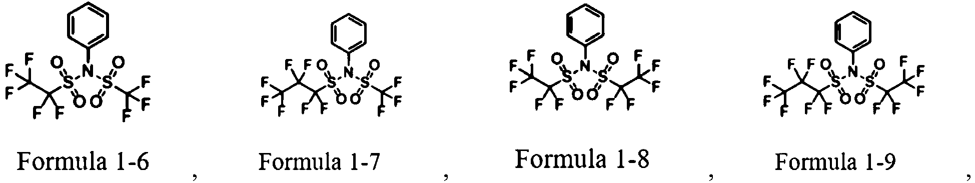

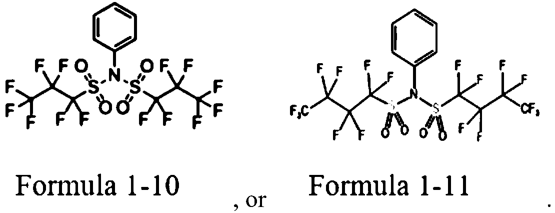

Therefore, by adding such a compound represented by Formula 1, the stability of the formed SEI film and CEI film can be improved due to the presence of the benzene ring in the compound represented by Formula 1, thereby enhancing the stability and the ionic conductivity at the electrode-electrolyte interface. Thus, the direct-current internal resistance of the battery is significantly reduced. As a result, the cycle performance and the low-temperature discharge performance of the lithium-ion battery are improved. Meanwhile, the presence of the benzene ring can reduce the energy barrier of the reaction of the compound represented by Formula 1, allowing the compound represented by Formula 1 to undergo the reduction reaction more readily during the formation process to quickly generate the SEI film and the CEI film, thereby reducing the side reaction between the electrode sheet and the electrolyte. As a result, the cycle performance of the lithium-ion battery is improved. In addition, the above dense CEI film can prevent Product B 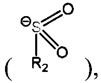 generated from the reductive decomposition of the compound represented by Formula 1 upon the electron attack, from corroding the positive electrode after further reaction, thereby reducing the self-discharge phenomenon. As a result, the cycle performance during high-temperature storage is improved.

In some embodiments of the present disclosure, the electrophilic film-forming additive includes at least one of borate compound, borate ester compound, a phosphite ester compound, an isocyanate compound, or an anhydride compound. A central atom in the borate compound and the borate ester compound is a B atom, which has electrophilicity. A central atom in the phosphite ester compound is a P atom, which has electrophilicity. Both the isocyanate compound and the anhydride compound contain unsaturated double bonds, which has electrophilicity. By adding such electrophilic film-forming additives, on the one hand, the activity of the lone-pair electrons on the N atom in Product A 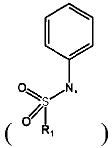 formed by the reductive decomposition of the compound represented by Formula 1 upon the electron attack can be weakened using the electrophilicity of the electrophilic film-forming additives, thereby blocking Product A from attacking the carbonate solvents in the electrolyte and thus reducing the gas generated by the decomposition of the carbonate solvents. Thus, the high-temperature storage performance of the battery is improved. On the other hand, such electrophilic film-forming additives can regulate the electrode-electrolyte interface to construct the dense SEI film and CEI film containing the N and S elements. In addition, the above dense CEI film can prevent Product B 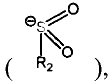 generated from the reductive decomposition of the compound represented by Formula 1 upon the electron attack, from corroding the positive electrode after further reaction, thereby reducing the self-discharge phenomenon. As a result, the cycle performance during high-temperature storage is improved.

As an example, the borate compound includes at least one of lithium bis(oxalate)borate, lithium difluoro(oxalato)borate, or lithium tetrafluoroborate.

In some embodiments of the present disclosure, the borate ester compound comprises a compound represented by Formula 2: 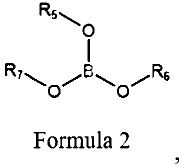 where R₅, R₆, and R₇ are each independently alkyl having 1 to 3 carbon atoms, phenyl, or silyl with a degree of unsaturation less than or equal to 2.

In the present disclosure, in the compound represented by Formula 2, the degree of unsaturation in silyl=the number of double bonds in silyl+the number of triple bonds in silyl×2. Silyl includes, but is not limited to, a trimethylsilyl, dimethylvinylsilyl, etc.

Therefore, by employing the borate ester compound with this composition as the electrophilic film-forming additive, on the one hand, the activity of the lone-pair electrons on the N atom in Product A 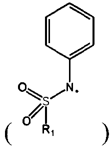 formed by the reductive decomposition of the compound represented by Formula 1 upon the electron attack can be weakened using the electrophilicity of the borate ester compound, thereby blocking Product A from attacking the carbonate solvents in the electrolyte and thus reducing the gas generated by the decomposition of the carbonate solvents. Thus, the high-temperature storage performance of the battery is improved. On the other hand, such an electrophilic film-forming additive can regulate the electrode-electrolyte interface to construct the dense SEI film and CEI film containing the N and S elements. In addition, the above dense CEI film can prevent Product B 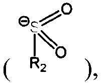 generated from the reductive decomposition of the compound represented by Formula 1 upon the electron attack, from corroding the positive electrode after further reaction, thereby reducing the self-discharge phenomenon. As a result, the cycle performance during high-temperature storage is improved.

In some specific embodiments of the present disclosure, in the above Formula 2, R₅, R₆, and R₇ are each independently a methyl, trimethylsilyl, phenyl, or dimethylvinylsilyl.

As an example, the borate ester compound includes at least one of the following compounds:

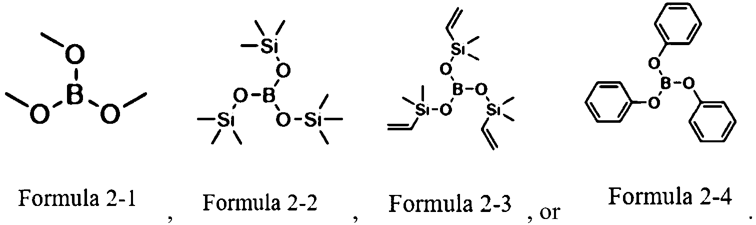

In some embodiments of the present disclosure, the phosphite ester compound includes a compound represented by Formula 3: 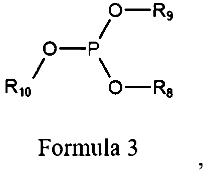 where R₈, R₉, and R₁₀ are each independently alkyl having 1 to 3 carbon atoms, phenyl, or silyl with a degree of unsaturation less than or equal to 2.

In the present disclosure, in the compound represented by Formula 3, the degree of unsaturation in silyl=the number of double bonds in silyl+the number of triple bonds in silyl×2. Silyl includes, but is not limited to, trimethylsilyl, dimethylvinylsilyl, etc.

Therefore, by employing the phosphite ester compound with this composition as the electrophilic film-forming additive, on the one hand, the activity of the lone-pair electrons on the N atom in Product A 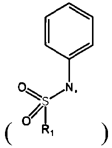 formed by the reductive decomposition of the compound represented by Formula 1 upon the electron attack can be weakened using the electrophilicity of the phosphite ester compound, thereby blocking Product A from attacking the carbonate solvents in the electrolyte and thus reducing the gas generated by the decomposition of the carbonate solvents. Thus, the high-temperature storage performance of the battery is improved. On the other hand, such an electrophilic film-forming additive can regulate the electrode-electrolyte interface to construct the dense SEI film and CEI film containing the N and S elements. In addition, the above dense CEI film can prevent Product B 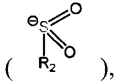 generated from the reductive decomposition of the compound represented by Formula 1 upon the electron attack, from corroding the positive electrode after further reaction, thereby reducing the self-discharge phenomenon. As a result, the cycle performance during high-temperature storage is improved.

In some specific embodiments of the present disclosure, in the above Formula 3, R₈, R₉, and R₁₀ are each independently a trimethylsilyl or phenyl.

As an example, the phosphite ester compound includes at least one of the following compounds:

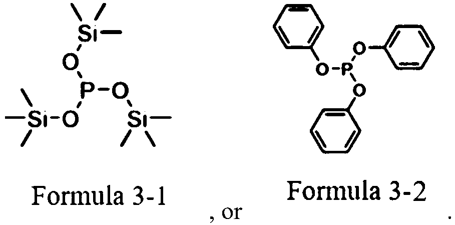

In some embodiments of the present disclosure, the above isocyanate compound includes a compound represented by Formula 4: 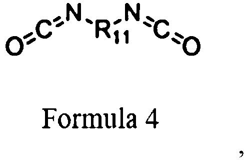 where R₁₁ is alkyl having 1 to 10 carbon atoms, phenyl, or alkyl-substituted phenyl.

The above alkyl having 1 to 10 carbon atoms includes, but is not limited to, methyl, ethyl, n-propyl, isopropyl, n-butyl, hexyl, etc.

Therefore, by employing the isocyanate compound with this composition as the electrophilic film-forming additive, on the one hand, the activity of the lone-pair electrons on the N atom in Product A 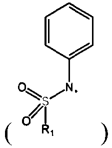 formed by the reductive decomposition of the compound represented by Formula 1 upon the electron attack can be weakened using the electrophilicity of the isocyanate compound, thereby blocking Product A from attacking the carbonate solvents in the electrolyte and thus reducing the gas generated by the decomposition of the carbonate solvents. Thus, the high-temperature storage performance of the battery is improved. On the other hand, such an electrophilic film-forming additive can regulate the electrode-electrolyte interface to construct the dense SEI film and CEI film containing the N and S elements. In addition, the above dense CEI film can prevent Product B 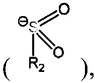 generated from the reductive decomposition of the compound represented by Formula 1 upon the electron attack, from corroding the positive electrode after further reaction, thereby reducing the self-discharge phenomenon. As a result, the cycle performance during high-temperature storage is improved.

In some specific embodiments of the present disclosure, in the above Formula 4, R₁₁ is hexyl, phenyl, or methylphenyl.

As an example, the isocyanate compound includes at least one of the following compounds:

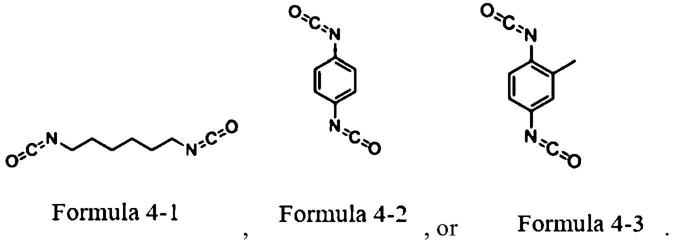

In some embodiments of the present disclosure, the anhydride compound includes at least one of a compound represented by Formula 5 and a compound represented by Formula 6: 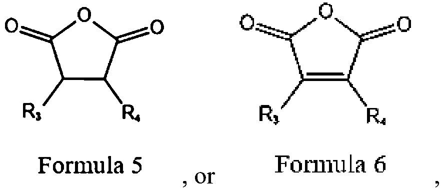 where R₃ and R₄ are each independently hydrogen atom or alkyl having 1 to 3 carbon atoms.

Therefore, by employing the anhydride compound with this composition as the electrophilic film-forming additive, on the one hand, the activity of the lone-pair electrons on the N atom in Product A 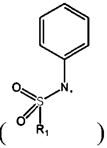 formed by the reductive decomposition of the compound represented by Formula 1 upon the electron attack can be weakened using the electrophilicity of the anhydride compound, thereby blocking Product A from attacking the carbonate solvents in the electrolyte and thus reducing the gas generated by the decomposition of the carbonate solvents. Thus, the high-temperature storage performance of the battery is improved. On the other hand, such an electrophilic film-forming additive can regulate the electrode-electrolyte interface to construct the dense SEI film and CEI film containing the N and S elements. In addition, the above dense CEI film can prevent Product B 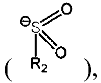 generated from the reductive decomposition of the compound represented by Formula 1 upon the electron attack, from corroding the positive electrode after further reaction, thereby reducing the self-discharge phenomenon. As a result, the cycle performance during high-temperature storage is improved.

In some embodiments of the present disclosure, in the above Formula 5 and Formula 6, R₃ and R₄ are each independently hydrogen atom or methyl.

As an example, the anhydride compound includes at least one of the following compounds:

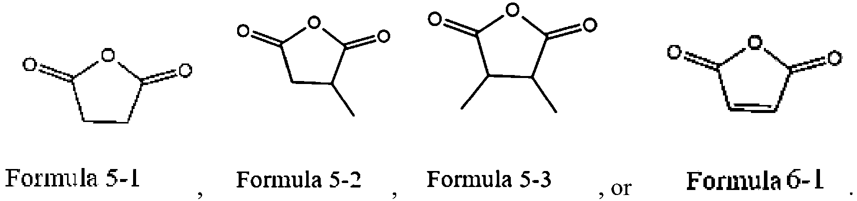

Therefore, adding the electrolyte additive including the compound represented by Formula 1 and the electrophilic film-forming additive of the present disclosure to the lithium-ion battery can not only improve the low-temperature discharge performance of the battery, but also enhance its high-temperature storage performance and high-temperature cycle performance.

A second aspect of the present disclosure provides an electrolyte. The electrolyte includes the electrolyte additive according to the first aspect of the present disclosure. Therefore, adding the electrolyte to the lithium-ion battery can not only improve the low-temperature discharge performance of the battery but also enhance its high-temperature storage performance and high-temperature cycle performance.

In some embodiments of the present disclosure, based on a total mass of the electrolyte, a mass proportion of the compound represented by Formula 1 ranges from 0.1% to 1.5%. For example, the mass proportion of the compound represented by Formula 1 is 0.1%, 0.2%, 0.3%, 0.4%, 0.5%, 0.6%, 0.7%, 0.8%, 0.9%, 1%, 1.1%, 1.2%, 1.3%, 1.4%, 1.5%, etc., or may be a range formed by any combination of the above values. Therefore, adding the compound represented by Formula 1 at such a content to the electrolyte can quickly form a stable SEI film and CEI film at the electrode-electrolyte interface, and thus reduce the direct-current internal resistance of the battery and the side reaction between the electrode sheet and the electrolyte, thereby improving the cycle performance and the low-temperature discharge performance of the lithium-ion battery.

In some embodiments of the present disclosure, based on a total mass of the electrolyte, a mass proportion of the electrophilic film-forming additive ranges from 0.1% to 3%. For example, the mass proportion of the electrophilic film-forming additive is 0.1%, 0.2%, 0.3%, 0.4%, 0.5%, 0.6%, 0.7%, 0.8%, 0.9%, 1%, 1.2%, 1.4%, 1.6%, 1.8%, 2%, 2.2%, 2.4%, 2.6%, 2.8%, 3%, etc., or may be a range formed by any combination of the above values. Therefore, adding the electrophilic film-forming additive at such a content to the electrolyte enables the electrophilic film-forming additive to exert a synergistic effect with the compound represented by Formula 1. On the one hand, the activity of the lone-pair electrons on the N atom in Product A 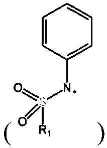 formed by the reductive decomposition of the compound represented by Formula 1 upon the electron attack can be weakened using the electrophilicity of the electrophilic film-forming additive, thereby blocking Product A from attacking the carbonate solvents in the electrolyte and thus reducing the gas generated by the decomposition of the carbonate solvents. Thus, the high-temperature storage performance of the battery is improved. On the other hand, such an electrophilic film-forming additive can regulate the electrode-electrolyte interface to construct the dense SEI film and CEI film containing the N and S elements. In addition, the above dense CEI film can prevent Product B 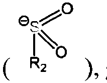 generated from the reductive decomposition of the compound represented by Formula 1 upon the electron attack, from corroding the positive electrode after further reaction, thereby reducing the self-discharge phenomenon. As a result, the cycle performance during high-temperature storage is improved.

In some embodiments of the present disclosure, the electrolyte further includes a solvent. The solvent includes a carbonate solvent. As an example, the carbonate solvent includes, but is not limited to, at least one of dimethyl carbonate, diethyl carbonate, propylene carbonate, ethylene carbonate, and ethyl methyl carbonate.

In some embodiments of the present disclosure, the electrolyte may further include an electrolyte salt. The electrolyte salt may includes at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalate)borate, lithium difluorobis(oxalato)phosphate, or lithium tetrafluoro(oxalate)phosphate.

In some embodiments of the present disclosure, the electrolyte may further include a negative film-forming additive, a positive film-forming additive, and an additive capable of improving certain performance of the battery, such as an additive capable of improving overcharge performance of the battery, an additive capable of improving high- temperature or low-temperature performance of the battery, and so on.

It should be noted that the negative film-forming additive, the positive film-forming additive, and the additive capable of improving certain performance of the battery are all types of additives commonly used in the art, which can be selected by those skilled in the art according to actual needs, and details thereof are omitted herein. Moreover, the characteristics and advantages described for the above electrolyte additives are also applicable to the electrolyte, and details thereof are omitted herein.

A third aspect of the present disclosure provides a battery. The battery includes the electrolyte according to the second aspect of the present disclosure.

Therefore, when the above electrolyte additive is added to the lithium-ion battery, the compound represented by Formula 1 decomposes into Product A 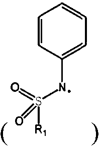 and Product B 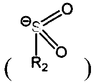 during formation and cycling processes. By adding the electrophilic film-forming additive, on the one hand, the activity of the lone-pair electrons on the N atom in Product A formed by the reductive decomposition of the compound represented by Formula 1 upon the electron attack can be weakened using the electrophilicity of the electrophilic film-forming additive, thereby blocking Product A from attacking the carbonate solvents in the electrolyte and thus reducing the gas generated by the decomposition of the carbonate solvents. Thus, the high-temperature storage performance of the battery is improved. On the other hand, the electrophilic film-forming additive can regulate the electrode-electrolyte interface to construct the dense SEI film and CEI film containing the N and S elements. Moreover, the stability of the formed SEI film and CEI film can be improved due to the presence of the benzene ring in the compound represented by Formula 1, thereby enhancing the stability and the ionic conductivity at the electrode-electrolyte interface. Thus, the direct-current internal resistance of the battery is significantly reduced. As a result, the cycle performance and the low-temperature discharge performance of the lithium-ion battery are improved. Meanwhile, the presence of the benzene ring can reduce the energy barrier of the reaction of the compound represented by Formula 1, allowing the compound represented by Formula 1 to undergo the reduction reaction more readily during the formation process to quickly generate the SEI film and the CEI film, thereby reducing the side reaction between the electrode sheet and the electrolyte. As a result, the cycle performance of the lithium-ion battery is improved. In addition, the dense CEI film can prevent Product B, generated from the reductive decomposition of the compound represented by Formula 1 upon the electron attack, from corroding the positive electrode after further reaction, thereby reducing the self-discharge phenomenon. As a result, the cycle performance during the high-temperature storage is improved. Therefore, adding the electrolyte additive to the lithium-ion battery can not only improve the low-temperature discharge performance of the battery but also enhance its high-temperature storage performance and high-temperature cycle performance.

Typically, the battery includes a positive electrode sheet, a negative electrode sheet, an electrolyte, and a separator. During a charge and discharge process of the battery, active ions are intercalated and deintercalated back and forth between the positive electrode and the negative electrode. The electrolyte functions to conduct ions between the positive electrode sheet and the negative electrode sheet. The separator is disposed between the positive electrode sheet and the negative electrode sheet, mainly serving to prevent a short circuit between a positive electrode and a negative electrode, while allowing ions to pass through.

The positive electrode sheet includes a positive current collector and a positive active material layer disposed on at least one side of the positive current collector. The positive active material layer includes a positive active material.

In some embodiments of the present disclosure, the positive current collector may include a metallic foil or a composite positive current collector. For example, the metallic foil may be an aluminum foil. The composite positive current collector may include a polymer material substrate layer and a metallic layer formed on at least one side surface of the polymer material substrate layer. For example, the composite negative current collector may be formed by depositing a metallic material (e.g., aluminum, aluminum alloys, nickel, nickel alloys, etc.) on a polymer material substrate (e.g., polypropylene (PP), polyethylene terephthalate (PET), polybutylene terephthalate (PBT), etc.).

As an example, the positive current collector has two surfaces opposite to each other in its thickness direction, and the positive active material layer is disposed on any one of or both of the two opposite surfaces of the positive current collector.

In some embodiments of the present disclosure, the positive active material layer may further include a positive active material. The positive active material may be a positive active material for batteries known in the art.

As an example, the positive active material includes at least one of the following materials: lithium-containing phosphates with an olivine structure, lithium transition metal oxides, or their respective modified compounds. However, the present disclosure is not limited to these materials, and other traditional materials that can be used as positive active materials for batteries may also be used. These positive active materials may be used alone or in combination of two or more. Examples of lithium transition metal oxides may include, but are not limited to, at least one of lithium cobalt oxide (e.g., LiCoO₂), lithium nickel oxide (e.g., LiNiO₂), lithium manganese oxide (e.g., LiMnO₂, LiMn₂O₄), lithium nickel cobalt oxide, lithium manganese cobalt oxide, lithium nickel manganese oxide, lithium nickel cobalt manganese oxide (e.g., LiNi_{1/3}Co_{1/3}Mn_{1/3}O₂ (also referred to as NCM₃₃₃), LiNi_{o.5}Co_{0.2}Mn_{0.3}O₂ (also referred to as NCM₅₂₃), LiNi_{0.5}Co_{0.25}Mn_{0.25}O₂ (also referred to as NCM₂₁₁), LiNi_{0.6}Co_{0.2}Mn_{0.2}O₂ (also referred to as NCM₆₂₂), LiNi_{0.8}Co_{0.1}Mn_{0.1}O₂ (also referred to as NCM₈₁₁), lithium nickel cobalt aluminum oxide (e.g., LiNi_{0.8}Co_{0.15}Al_{0.05}O₂), or their modified compounds. Examples of the lithium-containing phosphates with the olivine structure may include, but are not limited to, at least one of lithium iron phosphate (e.g., LiFePO₄ (also referred to as LFP)), a composite material of lithium iron phosphate and carbon, lithium manganese phosphate (e.g., LiMnPO₄), a composite material of lithium manganese phosphate and carbon, lithium manganese iron phosphate, or a composite material of lithium manganese iron phosphate and carbon.

In some embodiments of the present disclosure, the positive active material layer may further optionally include a conductive agent. As an example, the conductive agent may includes at least one of superconducting carbon, acetylene black, carbon black, Ketjen black, carbon dots, carbon nanotubes, graphene, or carbon nanofibers.

In some embodiments of the present disclosure, the positive active material layer may further optionally include a binder. As an example, the binder may includes at least one of polyvinylidene fluoride (PVDF), polytetrafluoroethylene (PTFE), vinylidene fluoride-tetrafluoroethylene-propylene terpolymer, vinylidene fluoride-hexafluoropropylene- tetrafluoroethylene terpolymer, tetrafluoroethylene-hexafluoropropylene copolymer, or fluorinated acrylate resin.

In some embodiments of the present disclosure, the positive electrode sheet may be prepared by the following method. The above components for preparing the positive electrode sheet, such as the positive active material, the conductive agent, and the binder, are dispersed in a solvent (e.g., N-methylpyrrolidone) to form a positive electrode slurry; the positive electrode slurry is coated onto the positive current collector, followed by processes such as drying and cold calendering, and the positive electrode sheet can thus be obtained.

The negative electrode sheet includes a negative current collector and a negative active material layer disposed on at least one side of the negative current collector. The negative active material layer includes a negative active material.

In some embodiments of the present disclosure, the negative current collector may be a metallic foil or a composite current collector. For example, a copper foil can be used as the metallic foil. The composite current collector may include a polymer material substrate layer and a metallic layer formed on at least one surface of the polymer material substrate layer. The composite current collector may be formed by depositing a metallic material (e.g., copper, copper alloys, nickel, nickel alloys, etc.) on a polymer material substrate (e.g., substrate of polypropylene (PP), polyethylene terephthalate (PET), or polybutylene terephthalate (PBT), etc.).

In some embodiments of the present disclosure, the negative active material may be a negative active material for batteries known in the art. As an example, the negative active material includes at least one of the following materials: graphite, soft carbon, hard carbon, silicon-based materials, tin-based materials, or lithium titanate. The silicon-based material may includes at least one of elemental silicon, silicon oxide, silicon-carbon composite, silicon-nitrogen composite, or silicon alloy. The tin-based material may includes at least one of elemental tin, tin oxide, or tin alloy.

In some embodiments of the present disclosure, the negative active material layer may optionally include a binder. The binder may includes at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), or carboxymethyl chitosan (CMCS).

In some embodiments of the present disclosure, the negative active material layer may optionally include a conductive agent. The conductive agent may includes at least one of superconducting carbon, acetylene black, carbon black, Ketjen black, carbon dots, carbon nanotubes, graphene, or carbon nanofibers.

In some embodiments of the present disclosure, the negative active material layer may optionally further include other additives, such as a thickener (e.g., sodium carboxymethyl cellulose (CMC-Na)).

In some embodiments of the present disclosure, the negative electrode sheet may be prepared by the following method. The above components for preparing the negative electrode sheet, such as the negative active material, the conductive agent, the binder, and any other components, are dispersed in a solvent (e.g., deionized water) to form a negative electrode slurry; the negative electrode slurry is coated onto the negative current collector, followed by processes such as drying and cold calendering, and the negative electrode sheet can thus be obtained.

The present disclosure has no particular limitation on the type of the separator, and any known separator with a porous structure, which exhibits good chemical stability and mechanical stability, can be selected.

In some embodiments of the present disclosure, a material of the separator may includes at least one of glass fiber, non-woven fabric, polyethylene, polypropylene, or polyvinylidene fluoride.

It should be noted that the features and advantages described above for the electrolyte are also applicable to the battery, and details thereof are omitted herein.

The examples of the present disclosure are described in detail below. It should be noted that the examples described below are exemplary and only intended to explain, rather than limiting, the present disclosure. In addition, all reagents used in the following examples are commercially available or can be synthesized according to the methods herein or known methods, unless otherwise specified. The reaction conditions, when not specified, are also readily obtained by those skilled in the art.

### Example 1

### 1. Preparation of positive electrode sheet

A positive active material LiNi_{0.8}Co_{0.1}Mn_{0.1}O₂, a conductive agent (conductive carbon black), and a binder (polyvinylidene fluoride (PVDF)) were added to N-methylpyrrolidone (NMP) in a mass ratio of 96.8:2:1.2 to prepare a positive electrode slurry (with a solid content of 68 wt% in the positive electrode slurry). The positive electrode slurry was coated onto upper and lower surfaces of an aluminum foil, and dried. After cold calendering, edge trimming, cutting, and slitting, the positive electrode sheet was obtained.

### 2. Preparation of negative electrode sheet

Graphite, a conductive agent (conductive carbon black), a thickener (carboxymethyl cellulose (CMC)), and a binder (styrene-butadiene rubber (SBR)) were mixed in deionized water at a mass ratio of 95: 1.5:2: 1.5 to prepare a negative electrode slurry (with a solid content of 49 wt% in the negative electrode slurry). The negative electrode slurry was coated onto upper and lower surfaces of a copper foil and dried. After cold calendering, edge trimming, cutting, and slitting, the negative electrode sheet was obtained.

### 3. Preparation of electrolyte

In an argon-filled glove box, an electrolyte additive including the compound represented by Formula 1 and the electrophilic film-forming additive was added to an organic solvent. After mixing uniformly, LiPF₆ was slowly added. After the lithium salt was completely dissolved, an electrolyte with a lithium salt concentration of 1 mol/L was obtained.

### 4. Separator

A 16 µm polyethylene film was used as the separator.

### 5. Preparation of lithium-ion battery

The positive electrode sheet, the separator, and the negative electrode sheet were sequentially stacked, with the separator placed between the positive electrode sheet and the negative electrode sheet to isolate a positive electrode and a negative electrode. They were wound to obtain a bare cell, and tabs were welded. The bare cell was placed in an outer package. The above prepared electrolyte was injected into the dried cell, followed by packaging, standing, formation, and shaping, to complete the preparation of the lithium-ion battery.

Methods for preparing lithium-ion batteries in Examples 1 to 27 and Comparative Examples 1 to 6 were the same as that of Example 1, with differences merely in the composition and the content of the electrolyte additives, as specified in Table 1.

**[Table 1]**

| | Electrolyte additive | | | | | Organic solvent | | | Electr olyte salt |
|---|---|---|---|---|---|---|---|---|---|
| | Compound composition represented by Formula 1 | Mass proport ion of the compo und represe nted by Formul a 1 in electrol yte (%) | Composi tion of electrop hilic film-forming additive | Mass proport ion of the electro philic film- formin g additiv e in electrol yte (%) | Mass ratio of the compo und represe nted by Formul a 1 to the electro philic film- formin g additiv e in electrol yte | Mass proport ion of ethylen e carbon ate in electrol yte (%) | Mass proport ion of ethyl methyl carbon ate in electrol yte (%) | Mass proport ion of diethyl carbon ate in electrol yte (%) | Mass propor tion of electro lyte salt in electro lyte (%) |
| Example 1 | Formula 1-1 | 0.5 | Formula 2-1 | 0.5 | 1:1 | 30 | 42.75 | 13.75 | 12.5 |
| Example 2 | Formula 1-1 | 0.5 | Formula 2-2 | 0.5 | 1:1 | 30 | 42.75 | 13.75 | 12.5 |
| Example 3 | Formula 1-1 | 0.5 | Formula 2-3 | 0.5 | 1:1 | 30 | 42.75 | 13.75 | 12.5 |
| Example 4 | Formula 1-1 | 0.5 | Formula 2-4 | 0.5 | 1:1 | 30 | 42.75 | 13.75 | 12.5 |
| Example 5 | Formula 1-1 | 0.5 | Formula 3-1 | 0.5 | 1:1 | 30 | 42.75 | 13.75 | 12.5 |
| Example 6 | Formula 1-1 | 0.5 | Formula 3-2 | 0.5 | 1:1 | 30 | 42.75 | 13.75 | 12.5 |
| Example 7 | Formula 1-1 | 0.5 | Formula 4-1 | 0.5 | 1:1 | 30 | 42.75 | 13.75 | 12.5 |
| Example 8 | Formula 1-1 | 0.5 | Formula 4-2 | 0.5 | 1:1 | 30 | 42.75 | 13.75 | 12.5 |
| Example 9 | Formula 1-1 | 0.5 | Formula 4-3 | 0.5 | 1:1 | 30 | 42.75 | 13.75 | 12.5 |
| Example 10 | Formula 1-1 | 0.5 | Formula 5-1 | 0.5 | 1:1 | 30 | 42.75 | 13.75 | 12.5 |
| Example 11 | Formula 1-1 | 0.5 | Formula 5-2 | 0.5 | 1:1 | 30 | 42.75 | 13.75 | 12.5 |
| Example 12 | Formula 1-1 | 0.5 | Formula 5-3 | 0.5 | 1:1 | 30 | 42.75 | 13.75 | 12.5 |
| Example 13 | Formula 1-1 | 0.5 | Formula 5-4 | 0.5 | 1:1 | 30 | 42.75 | 13.75 | 12.5 |
| Example 14 | Formula 1-1 | 0.5 | Formula 3-2 | 0.35 | 1:0.7 | 30 | 42.9 | 13.75 | 12.5 |
| Example 15 | Formula 1-1 | 0.5 | Formula 3-2 | 1 | 1:2 | 30 | 42.25 | 13.75 | 12.5 |
| Example 16 | Formula 1-1 | 0.5 | Formula 3-2 | 1.5 | 1:3 | 30 | 41.75 | 13.75 | 12.5 |
| Example 17 | Formula 1-1 | 0.5 | Formula 3-2 | 2.65 | 1:5.3 | 30 | 40.6 | 13.75 | 12.5 |
| Example 18 | Formula 1-1 | 1.43 | Formula 3-2 | 1 | 1:0.7 | 30 | 41.32 | 13.75 | 12.5 |
| Example 19 | Formula 1-1 | 0.34 | Formula 3-2 | 1 | 1:3 | 30 | 41.41 | 13.75 | 12.5 |
| Example 20 | Formula 1-1 | 0.19 | Formula 3-2 | 1 | 1:5.3 | 30 | 42.56 | 13.75 | 12.5 |
| Example 21 | Formula 1-5 | 0.5 | Formula 3-2 | 0.5 | 1:1 | 30 | 42.25 | 13.75 | 12.5 |
| Example 22 | Formula 1-10 | 0.5 | Formula 3-2 | 0.5 | 1:1 | 30 | 42.25 | 13.75 | 12.5 |
| Example 23 | Formula 1-11 | 0.5 | Formula 3-2 | 0.5 | 1:1 | 30 | 42.25 | 13.75 | 12.5 |
| Example 24 Example 25 | Formula 1-1 | 1.5 | Formula 3-2 | 1.5 | 1:1 | 30 | 40.75 | 13.75 | 12.5 |
| | Formula 1-1 | 0.1 | Formula 3-2 | 0.5 | 1:5 | 30 | 43.15 | 13.75 | 12.5 |
| Example 26 | Formula 1-1 | 0.1 | Formula 3-2 | 0.1 | 1:1 | 30 | 43.55 | 13.75 | 12.5 |
| Example 27 | Formula 1-1 | 1 | Formula 3-2 | 3 | 1:3 | 30 | 39.75 | 13.75 | 12.5 |
| Example 28 | Formula 1-5 | 0.1 | Formula 3-2 | 0.1 | 1:1 | 30 | 43.55 | 13.75 | 12.5 |
| Example 29 | Formula 1-5 | 1 | Formula 3-2 | 3 | 1:3 | 30 | 39.75 | 13.75 | 12.5 |
| Comparat ive Example 1 | / | / | / | / | / | 30 | 43.75 | 13.75 | 12.5 |
| Comparat ive Example 2 | Formula 1-1 | 0.5 | / | / | / | 30 | 43.25 | 13.75 | 12.5 |
| Comparat ive Example 3 | Formula 1-10 | 0.5 | / | / | / | 30 | 42.75 | 13.75 | 12.5 |
| Comparat ive Example 4 | / | / | Formula 3-2 | 1 | / | 30 | 42.75 | 13.75 | 12.5 |
| Comparat ive Example 5 | 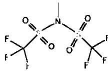 | 0.5 | Formula 3-2 | 0.5 | 1:1 | 30 | 42.75 | 13.75 | 12.5 |
| Comparat ive Example 6 | 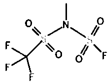 | 0.5 | Formula 3-2 | 0.5 | 1:1 | 30 | 42.75 | 13.75 | 12.5 |

The room-temperature cycle performance, high-temperature cycle performance, high-temperature storage performance, and low-temperature discharge performance of the lithium-ion batteries obtained in Examples 1 to 29 and Comparative Examples 1 to 6 were characterized. The characterization results are shown in Table 2.

### (1) Method for testing room-temperature cycle performance:

At 25°C, the battery was charged to 4.4 V at a constant current of 1.0C, and then charged to a cutoff current of 0.05C at a constant voltage. Then, the battery was discharged at a constant current of 1.0C, and its discharge capacity was recorded as C₀. The charge-discharge cycles were repeated until the capacity faded to 80% of C₀, and the number of cycles was recorded.

### (2) Method for testing high-temperature cycle performance:

At 45°C, the battery was charged to 4.4 V at a constant current of 1.0C, and then charged to a cutoff current of 0.05C at a constant voltage. Then, the battery was discharged at a constant current of 1.0C, and its discharge capacity was recorded as C₀. The charge-discharge cycles were repeated until the capacity faded to 80% of C₀, and the number of cycles was recorded.

### (3) Method for testing high-temperature storage performance:

At 25°C, the battery was charged to 4.4 V at a constant current of 1.0 C, and then charged to a cutoff current of 0.05C at a constant voltage of 4.4 V. Then, the battery was discharged at a constant current of 0.5C, and its discharge capacity was recorded as C₁. The battery was removed, and its initial thickness was measured as T₁ using a thickness tester. At 25°C, the battery was charged to 4.4 V at a constant current of 1.0C, and then charged to a cutoff current of 0.05C at a constant voltage of 4.4V. Then, the battery was transferred to 60°C and placed for 15 days, and its thickness after 15 days was measured as T₂ using the thickness tester. Then, the battery was discharged at a constant current of 1.0C, and its discharge capacity was recorded as C₂. After storage at 60°C for 15 days, a capacity retention rate =C₂/C₁*100%, and a battery expansion rate=100%*(T₂-T₁)/T₁.

### (4) Method for testing low-temperature discharge performance:

At 25°C, the battery was charged to 4.4 V at a constant current of 1.0C, and then charged to a cutoff current of 0.05C at a constant voltage of 4.4 V. Then, the battery was discharged at a constant current of 0.5C, and its discharge capacity was recorded as C₄. At -20°C, the battery was placed for 4 hours, and then discharged at a constant current of 0.5C, and its discharge capacity was recorded as C₅. A low-temperature discharge capacity retention rate at -20°C=C₅/C₄*100%.

**[Table 2]**

| | Cycle number until the capacity fades to 80% under 1C at room temperature | Cycle number until the capacity fades to 80% underlC at 45°C | High-temperature storage capacity retention rate (%) | High-temperature storage battery expansion rate (%) | Low-temperature discharge capacity retention rate (%) |
|---|---|---|---|---|---|
| Example 1 | 362 | 315 | 89.34% | 6.80% | 80.00% |
| Example 2 | 384 | 356 | 87.03% | 8.04% | 80.94% |
| Example 3 | 431 | 399 | 90.01% | 6.24% | 74.95% |
| Example 4 | 439 | 402 | 91.65% | 5.09% | 72.54% |
| Example 5 | 388 | 320 | 90.32% | 6.05% | 79.65% |
| Example 6 | 524 | 480 | 92.80% | 4.91% | 80.64% |
| Example 7 | 400 | 380 | 93.87% | 3.21% | 75.34% |
| Example 8 | 421 | 386 | 92.90% | 4.01% | 70.24% |
| Example 9 | 410 | 375 | 92.67% | 4.25% | 71.00% |
| Example 10 | 354 | 301 | 91.26% | 4.99% | 70.23% |
| Example 11 | 333 | 298 | 92.97% | 4.53% | 68.24% |
| Example 12 | 345 | 287 | 92.00% | 4.37% | 67.94% |
| Example 13 | 350 | 302 | 92.34% | 4.20% | 67.00% |
| Example 14 | 501 | 467 | 85.24% | 9.64% | 81.04% |
| Example 15 | 600 | 557 | 93.64% | 3.00% | 82.99% |
| Example 16 | 679 | 601 | 94.52% | 2.74% | 83.05% |
| Example 17 | 781 | 725 | 96.34% | 1.05% | 85.24% |
| Example 18 | 681 | 612 | 94.58% | 2.90% | 83.21% |
| Example 19 | 498 | 446 | 89.64% | 7.05% | 78.24% |
| Example 20 | 408 | 368 | 85.45% | 8.94% | 75.68% |
| Example 21 | 548 | 495 | 90.34% | 6.51% | 82.04% |
| Example 22 | 425 | 379 | 87.64% | 7.86% | 72.17% |
| Example 23 | 300 | 241 | 86.47% | 8.04% | 50.42% |
| Example 24 | 701 | 664 | 95.40% | 1.99% | 85.24% |
| Example 25 | 409 | 357 | 85.68% | 9.48% | 75.27% |
| Example 26 | 300 | 247 | 82.59% | 12.09% | 70.87% |
| Example 27 | 807 | 764 | 96.78% | 1.08% | 86.47% |
| Example 28 | 310 | 245 | 83.91% | 11.04% | 65.24% |
| Example 29 | 819 | 768 | 95.01% | 1.52% | 80.91% |
| Comparative Example 1 | 150 | 102 | 75.38% | 20.01% | 55.97% |
| Comparative Example 2 | 302 | 224 | 69.34% | 26.81% | 67.24% |
| Comparative Example 3 | 299 | 220 | 67.36% | 28.00% | 64.03% |
| Comparative Example 4 | 306 | 239 | 75.69% | 20.00% | 65.51% |
| Comparative Example 5 | 153 | 109 | 56.10% | 29.50% | 57.59% |
| Comparative Example 6 | 300 | 204 | 70.64% | 25.99% | 60.54% |

Conclusion: It can be seen from the data in Table 2 that, compared with Comparative Examples 1 to 6, the high-temperature storage capacity retention rate of the batteries of Example 1 to 29 was significantly higher, the high-temperature storage battery expansion rate of the battery of Example 1 to 29 was significantly lower, and the room-temperature cycle performance, the high-temperature cycle performance and the low-temperature discharge capacity retention rate of the batteries of Example 1 to 29 also had obvious advantages. It is indicated that by adding the electrolyte additive of the present disclosure to the battery, not only can the battery exhibit excellent cycle performance (the low-temperature cycle performance and the high-temperature cycle performance) and low-temperature discharge performance, but also its high-temperature storage performance can be significantly enhanced.

Compared with Comparative Example 2, in Examples 1 to 13, an electrophilic film-forming additive was added to the electrolyte, based on the electrolyte of Comparative Example 2. The room temperature cycle performance, the high-temperature cycle performance, the high-temperature storage capacity retention rate, the high-temperature storage battery expansion rate, and the low-temperature discharge capacity retention rate of Examples 1 to 13 all had obvious advantages over those of Comparative Example 2. In particular, the high-temperature storage battery expansion rate of Examples 1 to 13 was significantly lower than that of the battery of Comparative Example 2, and the high-temperature storage capacity retention rate of Examples 1 to 13 was significantly higher than that of the battery of Comparative Example 2. It is indicated that in the present disclosure, both the compound represented by Formula 1 and the electrophilic film-forming additive added in the electrolyte act synergistically to collectively improve the cycle performance and the low-temperature discharge performance of the battery. Meanwhile, the addition of the electrophilic film-forming additive significantly improves the high-temperature storage performance of the battery.

Compared with Example 6, Comparative Examples 5 and 6 respectively used fluorinated sulfonimide substances without a benzene ring. Although the electrophilic film-forming additives were also added to the electrolytes of Comparative Examples 5 and 6, the cycle performance, the high-temperature storage performance, and the low-temperature discharge performance of the batteries of Comparative Examples 5 and 6 were significantly lower than those of the battery in Example 6. It is indicated that the existing conventional fluorinated sulfonimide substances cannot act synergistically with the electrophilic film-forming additives, or that adding the electrophilic film-forming additive alone to the electrolyte (Comparative Example 4) does not significantly improve the cycle performance, the high-temperature storage performance, and the low-temperature discharge performance of the battery. In conclusion, it is shown that due to the presence of the benzene ring in the compound represented by Formula 1 of the present disclosure, it can act synergistically with the electrophilic film-forming additive, thereby significantly improving the overall performance of the battery.

Reference throughout this specification to terms "an embodiment," "some embodiments," "an example," "a specific example," or "some examples," means that a particular feature, structure, material, or characteristic described in connection with the embodiment or example is included in at least one embodiment or example of the present disclosure. In this specification, schematic representations of the above terms are not necessarily referring to the same embodiment or example of the present disclosure. Furthermore, the particular features, structures, materials, or characteristics may be combined in any suitable manner in one or more embodiments or examples. In addition, different embodiments or examples and features of different embodiments or examples described in the specification may be combined and integrated by those skilled in the art without contradicting each other.

Although embodiments of the present disclosure have been shown and described, it would be appreciated that the above embodiments are illustrative and cannot be construed as limiting the present disclosure, and changes, modifications, alternatives, and variations can be made by those skilled in the art to the embodiments within the scope of the present disclosure.

## Claims

1. An electrolyte additive, comprising a compound represented by Formula 1 and an electrophilic film-forming additive, 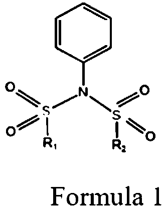 wherein in the compound represented by Formula 1, R₁ and R₂ are each independently fluorine atom or fluoroalkyl having 1 to 10 carbon atoms.

2. The electrolyte additive according to claim 1, wherein a mass ratio of the compound represented by Formula 1 to the electrophilic film-forming additive is 1:(0.7 to 5.3).

3. The electrolyte additive according to claim 1, wherein R₁ and R₂ are each independently fluorine atom, fluoromethyl, fluoroethyl, fluoropropyl, or fluorobutyl.

4. The electrolyte additive according to claim 3, wherein the compound represented by Formula 1 comprises at least one of the following compounds:

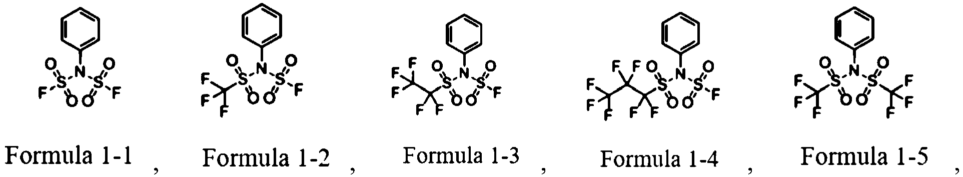

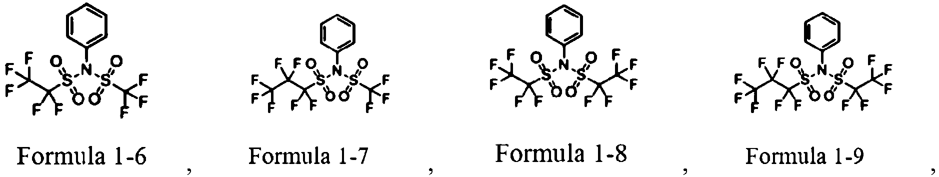

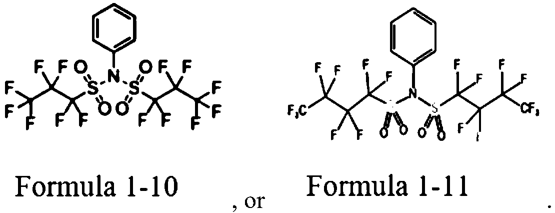

5. The electrolyte additive according to any one of claims 1 to 4, wherein the electrophilic film-forming additive comprises at least one of borate compound, borate ester compound, phosphite ester compound, isocyanate compound, or anhydride compound.

6. The electrolyte additive according to claim 5, wherein the borate compound comprises at least one of lithium bis(oxalate)borate, lithium difluoro(oxalato)borate, or lithium tetrafluoroborate.

7. The electrolyte additive according to claim 5, wherein the borate ester compound comprises a compound represented by Formula 2: 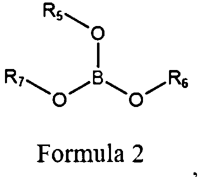 where R₅, R₆, and R₇ are each independently alkyl having 1 to 3 carbon atoms, phenyl, or silyl with a degree of unsaturation less than or equal to 2.

8. The electrolyte additive according to claim 7, wherein R₅, R₆, and R₇ are each independently methyl, trimethylsilyl, phenyl, or dimethylvinylsilyl.

9. The electrolyte additive according to claim 8, wherein the borate ester compound comprises at least one of the following compounds:

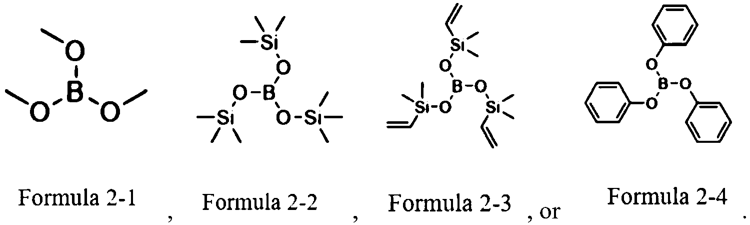

10. The electrolyte additive according to claim 5, wherein the phosphite ester compound comprises a compound represented by Formula 3: 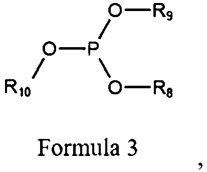 where R₈, R₉, and R₁₀ are each independently alkyl having 1 to 3 carbon atoms, phenyl, or silyl with a degree of unsaturation less than or equal to 2.

11. The electrolyte additive according to claim 10, wherein R₈, R₉, and R₁₀ are each independently a trimethylsilyl or phenyl.

12. The electrolyte additive according to claim 11, wherein the phosphite ester compound comprises at least one of the following compounds:

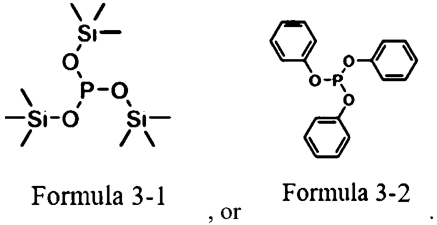

13. The electrolyte additive according to claim 5, wherein the isocyanate compound comprises a compound represented by Formula 4: 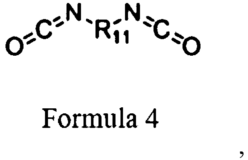 where R₁₁ is alkyl having 1 to 10 carbon atoms, phenyl, or alkyl-substituted phenyl.

14. The electrolyte additive according to claim 13, wherein R₁₁ is hexyl, phenyl, or methylphenyl.

15. The electrolyte additive according to claim 14, wherein the isocyanate compound comprises at least one of the following compounds:

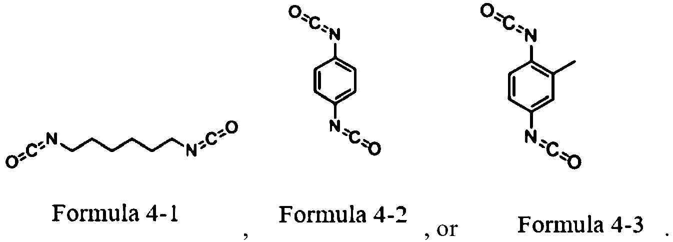

16. The electrolyte additive according to claim 5, wherein the anhydride compound comprises at least one of a compound represented by Formula 5 and a compound represented by Formula 6: 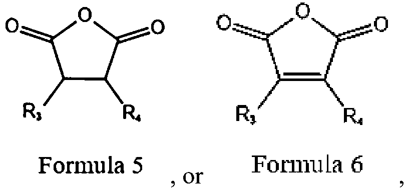 where R₃ and R₄ are each independently hydrogen atom or alkyl having 1 to 3 carbon atoms.

17. The electrolyte additive according to claim 16, wherein R₃ and R₄ are each independently hydrogen atom or methyl.

18. The electrolyte additive according to claim 17, wherein the anhydride compound comprises at least one of the following compounds:

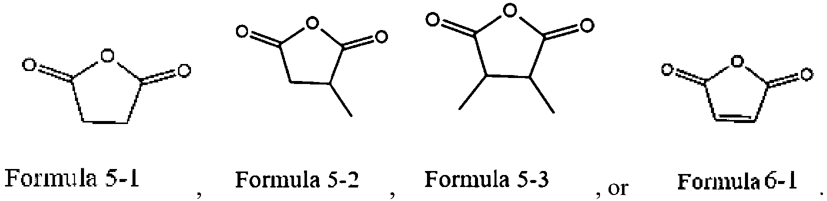

19. An electrolyte, comprising the electrolyte additive according to any one of claims 1 to 18.

20. The electrolyte according to claim 19, wherein based on a total mass of the electrolyte, a mass proportion of the compound represented by Formula 1 ranges from 0.1% to 1.5%.

21. The electrolyte according to claim 19, wherein based on a total mass of the electrolyte, a mass proportion of the electrophilic film-forming additive ranges from 0.1% to 3%.

22. The electrolyte according to any one of claims 19 to 21, wherein the electrolyte further comprises a solvent, the solvent comprising a carbonate solvent.

23. A battery, comprising the electrolyte according to any one of claims 19 to 22.
